Europäisches Patentamt

European Patent Office

Office européen des brevets

(11) Veröffentlichungsnummer: **0 217 074**
**A2**

## EUROPÄISCHE PATENTANMELDUNG

(21) Anmeldenummer: 86110893.4

(22) Anmeldetag: 06.08.86

(51) Int. Cl.⁴: **B21H 3/06** , F16B 39/30

(30) Priorität: 28.09.85 DE 8527757 U

(43) Veröffentlichungstag der Anmeldung:
08.04.87 Patentblatt 87/15

(84) Benannte Vertragsstaaten:
CH DE FR GB IT LI SE

(71) Anmelder: RICHARD BERGNER GMBH & CO
Bahnhofstrasse 8-16
D-8540 Schwabach(DE)

(72) Erfinder: Pfaff, Helmut
Am Hohen Hof 5
D-8540 Rednitzhembach(DE)

(74) Vertreter: Tergau, Enno et al
Patentanwälte Tergau & Pohl Postfach 11 93
47 Hefnersplatz 3
D-8500 Nürnberg 11(DE)

(54) Walzwerkzeug zum Herstellen einer Gewindeschraube und damit hergestellte Gewindeschraube.

(57) Bei einem Walzwerkzeug zum Herstellen einer Gewindeschraube, deren Gewindeprofilwendel an einer definierten Stelle ihres Umfanges durch Spaltung deformiert ist, ist die Formrippe (4,5) eines Walzbackens (1) in der Kalibrierzone (2) im wesentlichen in Axialrichtung (6) der zu fertigenden Schraube ausgebogen (Deformation (3)).

FIG.1

DRAUFSICHT auf WALZBACKEN (Ausschnitt)

ENDBEREICH

## Walzwerkzeug zum Herstellen einer Gewindeschraube und damit hergestellte Gewindeschraube

Die Erfindung betrifft ein Walzwerkzeug mit den im Oberbegriff des Anspruches 1 aufgeführten Merkmalen.

Bei Elektro-Armaturen, z.B. Lüsterklemmen, aber auch bei anderen Armaturen und Geräten, die teilweise vormontiert sind, werden die Schrauben erst bei der Endmontage vollständig eingeschraubt und angezogen. Damit sie auf dem Transportweg vom Hersteller zum Verarbeiter nicht verlorengehen, wäre es normalerweise erforderlich, die Schrauben vollständig und fest einzuschrauben. Bei der Endmontage wäre es dann erforderlich, die Schrauben zunächst wieder aus der Mutter so weit herauszudrehen, daß sie die Einsatzbohrung z.B. für das blanke Ende einer elektrischen Leitung freigeben, jedoch nicht aus dem Muttergewinde herausfallen. Zur Vermeidung der dadurch entstehenden, zusätzlichen Arbeit ist es bereits bekannt, das Schraubengewinde an einer definierten Stelle zu deformieren, wodurch das Einschraubmoment der Schraube an dieser Stelle erhöht ist, so daß die Schraube in nicht vollständig eingeschraubter Stellung transportsicher im Muttergewinde haftet. Bei einer zu diesem Zweck vorbekannten Lösung ist das Schraubengewinde an der besagten Stelle mit einem Gewindeversatz in Form einer kurzen Verbreiterung des Gewindegrates oder einer kurzen Abflachung der Gewindekerbe versehen (DE-GM 83 19 036).

Es wäre unrationell, eine derart gewollte Unregelmäßigkeit des Gewindes in einem gesonderten Arbeitsgang an das Schraubengewinde anzuformen. Vielmehr ist es bekannt, derartige örtliche Deformationen durch eine Zusatzeinrichtung am Gewindewalzwerkzeug, nämlich an einem Gewindewalzbacken zu erzeugen (DE-GM 82 02 339). Der Erfindung liegt die Aufgabe zugrunde, ein Walzwerkzeug der eingangs genannten Art so auszubilden, daß mit dem Walzvorgang zur Herstellung des Schraubengewindes gleichzeitig die gewünschte örtliche Gewindedeformierung herstellbar ist, hierzu jedoch das Walzwerkzeug in einfacher Weise so ausgebildet werden kann, daß es eine hohe Standzeit behält. Diese Aufgabe wird durch das Kennzeichnungsmerkmal des Anspruches 1 gelöst.

Durch die Erfindung wird im Deformationsbereich die Gefügestruktur der Formrippe des Walzbackens weitgehend erhalten. Hierbei ist zu berücksichtigen, daß Walzbacken in der Regel aus kohlenstoffreichem, nicht sehr duktilem Stahl bestehen. Dadurch besitzen nur begrenzte Verformungsmöglichkeiten. Die Verformung muß ohnehin vor dem Härten des Walzbackens vorgenommen werden. Vor allen Dingen erfordert die erfindungsgemäße Ausbildung des Walzbackens keine kerbende oder spanabhebende Bearbeitung und damit keine Unterbrechung der Gefügestruktur der Formrippe. Eine solche Unterbrechung würde nämlich leicht zu einer Beeinträchtigung der Standzeit der Walzbacke führen. Jedenfalls ist die weitgehende Biegeformung der Formrippe am Walzbacken vor dem Härten wesentlich einfacher als z.B. das Einpassen eines Einsatzes. Wegen der geringen Länge der Verformung -bezogen auf die Walzrichtung -sind auch Maßnahmen am Gegenbacken beispielsweise in Form von Aussparungen überflüssig.

Durch das Kennzeichnungsmerkmal des Anspruches 5 läßt sich das Walzwerkzeug in besonders einfacher Weise vor dem Härtevorgang erfindungsgemäß ausgestalten. Die erforderliche Deformation am Walzbacken ist gut reproduzierbar, da der "Krater-Halbmesser" ein Maß für die Deformation des Schraubgewindes der Schraube und damit des Sicherungseffektes ist. Der Körner läßt sich vor dem einfachen Hammerschlag leicht zwischen zwei Formrippen des Walzbackens zentrieren. Die Verformungskräfte wirken dabei hauptsächlich in senkrechter Richtung auf die Deformierungsstelle am Walzbacken. Es treten im Bereich der deformierten Formrippe nur geringe Biegekräfte auch beim Walzen des Gewindes auf. Hohe Biegekräfte würden ein vorzeitiges Ausbröckeln des Walzbackens und damit eine Verminderung der Standzeit bedeuten.

Die durch die erfindungsgemäße Ausgestaltung des Walzwerkzeuges am Walzprodukt, nämlich am Schraubgewinde der Gewindeschraube erzeugte Deformation hat den Vorteil, daß die Gewindeflanken der Mutter beim Überschrauben nicht zum Eingriff in die Spaltstelle am Schraubgewinde gelangen. Die Sicherung der Schraube gegen Herausdrehen unter Vibration beruht auf einer örtlich begrenzten Preßpassung zwischen Schrauben-und Muttergewinde. Die Preßpassung wird beim Eindrehen der Schraube in die Mutter erzeugt, und zwar durch teilweise plastische Deformation des abgespaltenen Gewindeflankenteiles bzw. der abgespaltenen Gewindeflankenteile (= FT). Diese plastische Deformation wird vom Kerndurchmesser der Mutter vorgenommen. Sie erfolgt deswegen nur in radialer Richtung (Abflachung der Spitzen an dem abgespaltenen Gewindeflankenteil). Dies hat auch den Vorteil, daß keine Beschädigung der Muttergewindeflanken verursacht wird. Das Eindrehmoment der Schraube in das Muttergewinde wird von der Höhe des abgespaltenen Gewindeflankenteiles beeinflußt. Diese Höhe ist bei einer Ausbildung nach dem Kennzeichnungsmerkmal des Anspruches 5 von dem "Krater-Halbmesser" der Walzbacken-bzw. Formrippendeformation abhängig. Die maximal mögliche Höhe des abgespaltenen Gewindeflankenteils entspricht der Höhe des Gewindeprofils. Die einfache Variabilität des Ausbiegungsgrades am Walzwerkzeug ist von Vorteil, wenn Gewindetoleranzen zwischen Schraube und Mutter ebenfalls variieren.

Der Gegenstand der Erfindung wird an hand der Figuren näher erläutert. Es zeigen:

Fig. 1 eine Draufsicht auf einen erfindungsgemäß ausgestalteten Walzbacken,

Fig. 2 eine Draufsicht auf eine mit dem erfindungsgamäß ausgestalteten Walzbacken hergestellte Schraube,

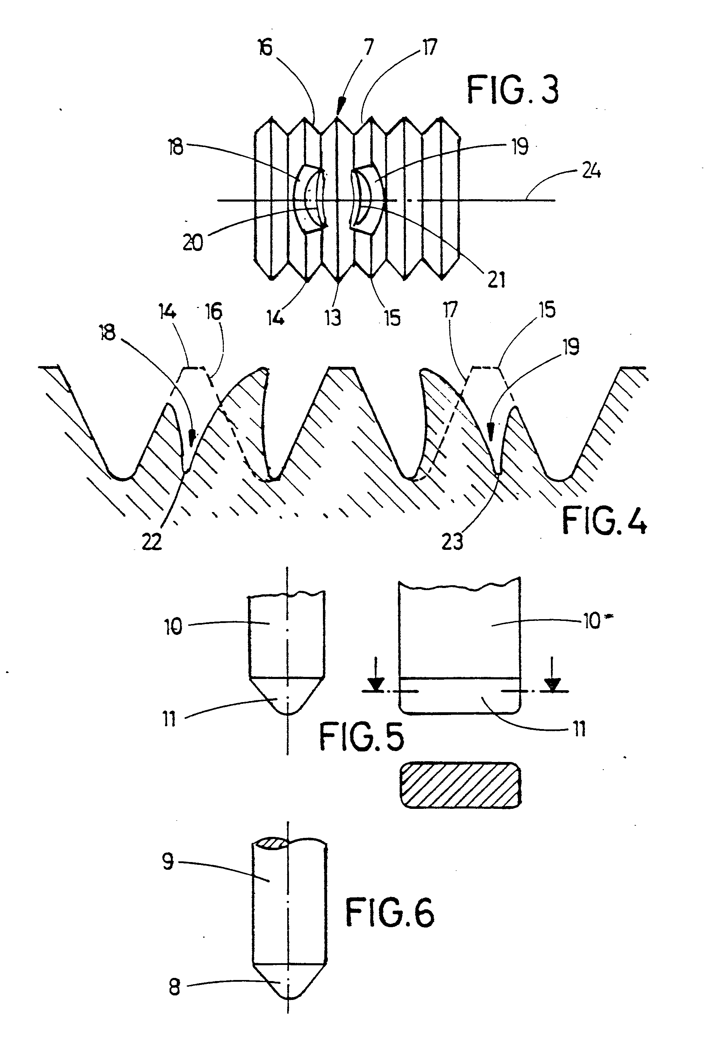

Fig. 3 einen Teilausschnitt aus Fig. 2 an der Deformationsstelle des gewalzten Schraubengewindes,

Fig. 4 einen vergrößerten Gewindequerschnitt entsprechend der Linie IV-IV in Fig. 3 an der Deformationsstelle,

Fig. 5 einen Körner zur Herstellung der Formrippendeformation in drei unterschiedlichen Ansichten,

Fig. 6 eine Seitenansicht einer einfachen Körner-Ausführungsform.

Der Walzbacken 1 ist in seiner Kalibrierzone 2 mit einer Deformation 3 versehen. Die Deformation 3 besteht darin, daß die beiden Formrippen 4 und 5 im wesentlichen rechtwinklig zur Längsrichtung der Formrippen 4,5 bzw. in Axialrichtung 6 der zu fertigenden Schraube 7 ausgebogen sind. Es würde aber auch die Deformation nur einer Formrippe 4 bzw. 5 ausreichen. Im Falle des Ausführungsbeispieles sind die beiden Formrippen 4,5 benachbart. Der Verformungsgrad der Auseinanderbiegung steigt vom Fuß bis zum Kopfsteg der Formrippe 4 an. Der Anstieg erfolgt vorzugsweise stetig.

Die Deformation 3 des Walzbackens 1 ist der Abdruck der Spitze 8 eines zwischen die beiden Formrippen 4,5 getriebenen Körners 9. Dabei weist der Abdruck bzw. die Deformation 3 die Form eines Hohlkegels auf.

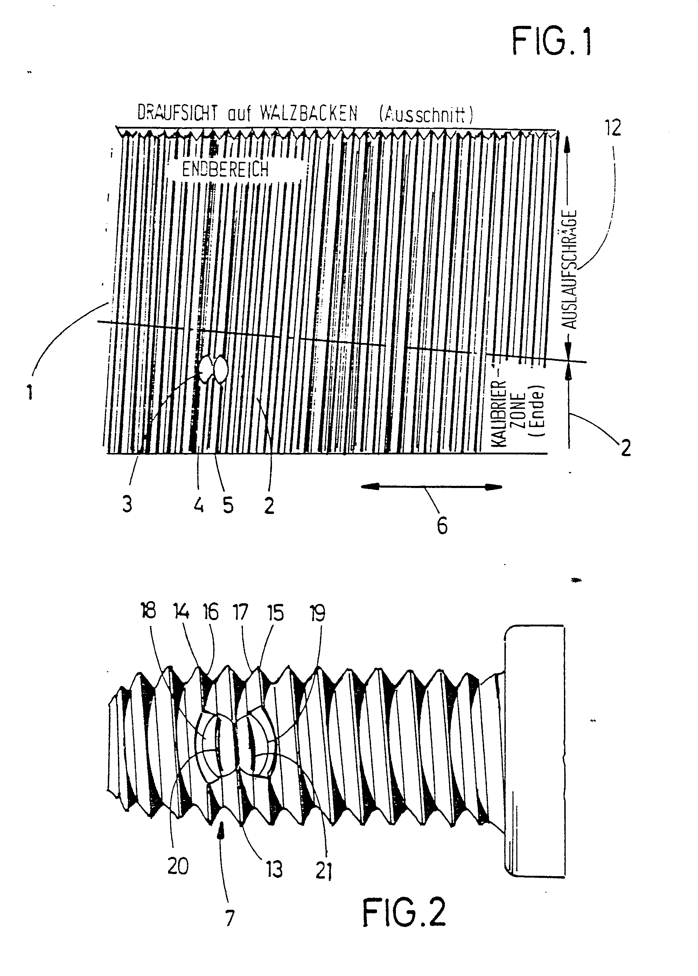

Der Körner 10 gemäß Fig. 5 weist eine Spitze 11 in Form eines Keiles mit abgerundeten Ecken auf. Bei Verwendung eines derartigen Körners erstreckt sich die Deformation analog der Deformation 3 von Fig. 1 über einen größeren Umfangsbereich der Schraube.

Die Deformation 3 ist so im Auslaufbereich des Walzbackens 1 angeordnet, daß die durch sie erzeugte Deformationsstelle des Schraubgewindes im weiteren Vollzug der Fertigung nach einer 180°-Drehung bereits im Bereich der Auslaufschräge 12 des Gegenwalzbackens liegt, die durch die Deformation 3 gefertigte Deformationsstelle am Gewinde also nicht mehr reduziert werden kann.

Bei der mit dem Walzbacken gemäß Fig. 1 hergestellten Schraube 7 sind die beiden beiderseits des Gewindeprofilwendels 13 liegenden Gewindeprofilwendel 14,15 an ihren in Axialrichtung 6 einander zugewandten, gegenüberliegenden Seiten 16 bzw. 17 mit je einer im wesentlichen in Gewindeumfangsrichtung verlaufenden Einkerbung 18 bzw. 19 derart versehen, daß aus den einander zugewandten Flanken bzw. Seiten 16,17 der beiden Gewindeprofilwendel 14,15 Flankenteile 20,21 abgetrennt und in Axialrichtung 6 aufeinanderzu plastisch verdrängt sind. Die Grundlinien 22,23 der beiden Einkerbungen 18,19 sind Kreisbogensegmente, die etwa auf einem gemeinsamen Kreisbogen liegen -entsprechend dem "Kraterrand" des Abdruckes der Körnerspitze 8 des Körners 9.

Bezugszeichenliste

1 Walzbacken
2 Kalibrierzone
3 Deformation
4 Formrippe
5 Formrippe
6 Axialrichtung
7 Schraube
8 Spitze
9 Körner
10 Körner
11 Keil
12 Auslaufschräge
13 Gewindeprofilwendel
14 Gewindeprofilwendel
15 Gewindeprofilwendel
16 Seite
17 Seite
18 Einkerbung
19 Einkerbung
20 Flankenteil
21 Flankenteil
22 Grundlinie
23 Grundlinie
24 Schraubenachse

## Ansprüche

1. Walzwerkzeug zum Herstellen einer Gewindeschraube (7),

-deren Gewindeprofilwendel (13,15) an einer definierten Stelle ihres Umfanges durch Spaltung deformiert ist,

mit zwei Walzbacken (1),

dadurch gekennzeichnet,

daß in der Kalibrierzone (2) eines Walzbackens (1) mindestens eine Formrippe (4,5) im wesentlichen in Axialrichtung (6) der zu fertigenden Schraube - (7) ausgebogen ist.

2. Walzwerkzeug nach Anspruch 1,

dadurch gekennzeichnet,

daß der Verformungsgrad der Ausbiegung vom Fuß bis zum Kopfsteg der Formrippe (4) ansteigt.

3. Walzwerkzeug nach Anspruch 2,

dadurch gekennzeichnet,

daß der Verformungsgrad stetig ansteigt.

4. Walzwerkzeug nach einem oder mehreren der vorhergehenden Ansprüche,

dadurch gekennzeichnet,

daß zwei benachbarte Formrippen (4,5) im wesentlichen in Axialrichtung (6) der zu fertigenden Schraube (7) auseinandergebogen sind.

5. Walzwerkzeug nach einem oder mehreren der vorhergehenden Ansprüche,

dadurch gekennzeichnet,

daß die Auseinanderbiegung der Abdruck der Spitze (8) eines zwischen die beiden Formrippen (4,5) eingetriebenen Körners (9) ist.

6. Walzwerkzeug nach Anspruch 5,

dadurcn gekennzeichnet,

daß der Abdruck (3) die Form eines Hohlkegels aufweist (Fig. 1).

7. Walzwerkzeug nach Anspruch 5,

dadurch gekennzeichnet,

daß der Abdruck (3) die Form eines negativen Keiles mit abgerundeten Ecken aufweist (Körner gemäß Fig. 5).

8. Mit einem nach einem der vorhergehenden Ansprüche ausgebildeten Walzwerkzeug gewalzte Gewindeschraube,

dadurch gekennzeichnet,

daß ein Gewindeprofilwendel (14) an einer Seite mit einer in Gewindeumfangsrichtung verlaufenden Einkerbung (18) in Form eines keilförmigen Kreissegmentbogens versehen ist, wobei die Achse dieses Kreises senkrecht die Schraubenachse (24) - schneidet.

Schraube nach Anspruch 8,

dadurch gekennzeichnet,

daß zwei beiderseits eines Gewindeprofilwendels - (13) liegende Gewindeprofilwendel (14,15) an ihren in Axialrichtung (6) einander zugewandten, gegenüberliegenden Seiten (16 bzw. 17) mit je einer im wesentlichen in Gewindeumfangsrichtung verlaufenden Einkerbung (18 bzw. 19) versehen sind derart, daß aus den einander zugewandten Flanken (16,17) der beiden Gewindeprofilwendel (14, 15) Flankenteile (20,21) getrennt und in Axialrichtung aufeinanderzu plastisch verdrängt sind.

10. Schraube nach Anspruch 9,

dadurch gekennzeichnet,

daß die Grundlinien (22,23) der beiden Einkerbungen (18,19) Kreisbogensegmente sind, die etwa auf einem gemeinsamen Kreisbogen liegen.

# FIG.1

DRAUFSICHT auf WALZBACKEN   (Ausschnitt)

ENDBEREICH

AUSLAUFSCHRÄGE

KALIBRIER—
ZONE
(Ende)

1

12

2

3   4 5   2

6

# FIG.2

18  14  16  17  15  19

20   13   21

7

0 217 074

FIG. 3

FIG.4

FIG.5

FIG.6